# EUROPÄISCHE PATENTSCHRIFT

(11) **EP 1 894 743 B1**
(45) Veröffentlichungstag und Bekanntmachung des Hinweises auf die Patenterteilung: **10.11.2010**
(21) Anmeldenummer: 07016941.2
(22) Anmeldetag: 29.08.2007
(51) Int. Cl.: B60B 1/04, B60B 27/02

(54) **Nabe und Laufrad, insbesondere für Fahrräder**
Hub and wheel, in particular for bicycles
Moyeu et roue de roulement, en particulier pour vélos

(30) Priorität: 31.08.2006 DE 102006040919
(43) Veröffentlichungstag der Anmeldung: 05.03.2008
(73) Patentinhaber: DT Swiss AG, 2500 Biel (CH)
(72) Erfinder: Spahr, Stefan, 2543 Lengnau (CH); Walthert, Martin, 3013 Bern (CH); Reuteler, Andreas, 2502 Biel/Bienne (CH)
(74) Vertreter: Schütte, Hartmut

(56) Entgegenhaltungen:
- EP-A- 1 270 392
- EP-A- 1 288 018
- EP-A- 1 422 078
- EP-A- 1 437 235
- EP-A- 1 518 717
- DE-A1- 2 927 138
- DE-A1- 19 915 714
- FR-A- 903 530
- GB-A- 1 294 554
- IT-B- 1 220 031
- US-A- 2 937 905
- US-A- 5 810 453

## Beschreibung

Die Erfindung betrifft eine Nabe, sowie ein Laufrad, insbesondere für Fahrräder, sowie ein damit ausgerüstetes Fahrrad. Die Erfindung kann sowohl für Vorderräder als auch für Hinterräder, an denen in der Regel ein oder mehrere Ritzel angeordnet werden können, eingesetzt werden.

Im Bereich der Amateure und des professionellen Radsports spielen die Belastbarkeit, das Gewicht und die Wartbarkeit der Komponenten eine entscheidende Rolle, da die Benutzer Wert auf hochwertige, leichte und einfach zu wartende Komponenten legen. Ein weiterer Wunsch ist, dass bei dem Defekt eines Teils einer Komponente nicht gleich die ganze Komponente ausgetauscht werden muss, sondern, dass auch einzelne Teile im Rahmen einer regelmäßigen Wartung oder bei Defekten einzeln ausgetauscht werden können.

In der Regel besteht eine Fahrradnabe aus einem um eine Nabenachse herum drehbar angeordnetem Nabengehäuse, welches eine Nabenhülse und zwei integral daran ausgebildete Nabenflansche umfasst, die mit Löchern zur Aufnahme der Speichen vorgesehen sind, die die Nabe mit der Felge verbinden. Im Inneren der Nabenhülse sind wenigstens zwei Lager vorgesehen; um das Nabengehäuse drehbar gegenüber der Nabenachse zu lagern. Dabei wird meist die äußere Lagerschale in der Nabenhülse gebildet, während der innere Lagerring bzw. die innere Lagerschale auf der Nabenachse ausgebildet ist. Möglich ist auch, das ein separater Lageraußenring mit der Nabenhülse in Verbindung steht, während ein separater Lagerinnenring mit der Nabenachse in Verbindung steht. Bei einer solchen bekannten Nabe werden die Nabenflansche durch die an den Nabenflanschen angreifenden und radial nach außen gerichteten Zugkräfte der Speichen gedehnt. Durch die von der Belastung abhängige Dehnung wird gleichzeitig auch das Lagerspiel beeinflusst, sodass sich mit der Speichenspannung auch die Betriebsbedingungen des Lagers verändern. Dieser Zusammenhang kann zu einer verminderten Betriebsfestigkeit der Nabe führen.

Ein weiterer Nachteil einer solchen bekannten Nabe ist, dass im Falle eines Nabenflanschbruches durch z.B. Überbelastung die gesamte Nabe ausgetauscht werden muss. Eine Möglichkeit zur Lösung dieses Problems ist eine Nabe, die aus mehreren Teilen besteht.

So ist aus der DE 94 03 506 U1 eine mehrteilige Nabe für ein Fahrrad bekannt geworden, bei der die speichentragenden Flansche in ein Mittelstück gesteckt werden und bei der eine besondere Anschlussgeoznetrie, insbesondere eine Polygonprofil, verwendet wird. Im Inneren der speichentragenden Flansche sind die Lager zur Lagerung des Nabengehäuses gegenüber der Nabenachse vorgesehen. Dadurch bewirkt auch bei dieser Nabe die radiale Belastung der Speichen eine Dehnung der Nabenflansche und damit eine Dehnung der Lagersitze, was sich negativ auf die Standfestigkeit der Lager auswirken kann.

Mit der gattungsgemäßen GB 1 294 554 A ist ein Rad mit einer Nabe bekannt geworden, wobei das Nabengehäuse eine Nabenhülse und zwei an der Nabenhülse angeordnete separate Nabenflansche aufweist, an denen Speichen angeordnet werden, um das Nabengehäuse mit der Felge zu verbinden. An der Nabenhülse sind radial nach außen stehende Zähne vorgesehen, die in Rücksprünge in den Nabenflanschen eingreifen, um die Nabenflansche an der Nabenhülse zu befestigen.

Aus der US 5,829,844 ist eine Nabe für ein Fahrrad bekannt geworden, bei der an dem Nabengehäuse separate Nabenflansche zur Aufnahme der Speichen vorgesehen sind. Die Nabenflansche werden über die Enden der Nabenachse auf das Nabengehäuse aufgesteckt, wobei eine Art Innenverzahnung an den Nabenflanschen mit einer Art Außenverzahnung an dem Nabengehäuse zusammenwirkt, um eine drehfeste Aufnahme der Nabenflansche an dem Nabengehäuse zu bewirken. Durch Unterlegscheiben und separate Schrauben werden die Nabenflansche anschließend durch den seitlich aufgebrachten Druck fixiert.

Nachteilig an dieser aus dem Stand der Technik bekannten Nabe ist, dass die Unterlegscheiben und die großformatigen Schrauben zur Befestigung der Nabenflansche an dem Nabengehäuse ein zusätzliches Gewicht aufweisen. Außerdem ist die Fertigung der Nabe durch das erforderliche Außenprofil an dem Nabengehäuse aufwändig.

Mit der EP 0 853 007 B1 ist eine geflanschte Fahrradnabe bekannt geworden, bei der die Nabenflansche zur Aufnahme der Speichen nicht einstückig mit der Nabenhülse ausgebildet sind, sondern als separate Teile vorgesehen sind. Bei dieser Nabe werden die Nabenflansche zur Montage auf vorgesehene Bereiche des Nabengehäuses aufgeschoben, bis die Nabenflanschen fest an entsprechenden Absätzen des Nabengehäuses anliegen. Durch Aufschrauben von Befestigungskappen werden die Nabenflansche axial geklemmt und so vor einem Verrutschen gesichert.

Bei dieser aus dem Stand der Technik bekannten Nabe können die Befestigungskappen abgeschraubt und so die Nabenflansche der Nabe ausgetauscht werden, sodass z.B. defekte Nabenflansche ausgetauscht werden können. Bei dieser Nabe werden die Lager zwischen dem Nabengehäuse und der Nabenachse durch die radiale Speichenspannung nicht belastet, da die Nabenflansche separat vorgesehen sind.

Nachteilig an dieser Nabe ist allerdings, dass einerseits das Nabengehäuse eine erhebliche radiale Dicke benötigt, damit daran die axialen Anschläge für die Nabenflansche gebildet werden können. Ein weiterer Nachteil ist, dass große axial aufgeschraubte Befestigungskappen benötigt werden, um die Nabenflansche zu fixieren, wodurch die Fehleranfälligkeit und auch das Gesamtgewicht der Nabe ansteigt. Ein weiterer Nachteil ist dort, dass auf dem Innenumfang des Nabenflansches und auf dem Außenumfang des Nabengehäuses Verzahnungen vorgesehen sind, die aufwändig zu fertigen und deshalb teuer sind.

Gegenüber dem angeführten Stand der Technik ist es Aufgabe der vorliegenden Erfindung eine Nabe und ein Laufrad, insbesondere für Fahrräder zur Verfügung zu stellen, bei denen es durch einen modularen Aufbau möglich ist, einzelne Teile auszutauschen. Ein weiterer Aspekt der Aufgabe ist es, eine leichte Nabe zur Verfügung zu stellen.

Diese Aufgabe wird gelöst durch eine Nabe mit den Merkmalen des Anspruchs 1 und durch ein Laufrad mit den Merkmalen des Anspruchs 15. Bevorzugte Weiterbildungen und Ausgestaltungen der Erfindung sind Gegenstand der Unteransprüche.

Eine erfindungsgemäße Nabe ist insbesondere für den Einsatz an Fahrrädern geeignet und weist eine feststehende Nabenachse und ein über insbesondere wenigstens ein und vorzugsweise wenigstens zwei Lager gegenüber der feststehenden Nabenachse drehbar gelagertes Nabengehäuse auf. Das Nabengehäuse umfasst eine Nabenhülse und zwei an der Nabenhülse angeordnete separate Nabenflansche, an denen Speichen angeordnet werden können, um das Nabengehäuse mit einer Felge zu verbinden. Erfindungsgemäß sind die Nabenflansche über im Wesentlichen senkrecht bzw. quer zur Nabenachse angeordnete Verbindungselemente an der Nabenhülse befestigt. Die Verbindungselemente verbinden die Nabenflansche sowohl drehfest als auch in axialer Richtung fest mit der Nabenhülse. Dazu ist wenigstens ein Verbindungselement als Schraubteil ausgeführt und umfasst ein Außengewinde an einem Schraubenkörper und ein Stiftteil.

Die Erfindung bietet viele Vorteile. Im Unterschied zum bekannten Stand der Technik werden die Nabenflansche nicht über axial ausgerichtete Befestigungselemente, die sich um den kompletten Umfang der Nabenachse herum erstrecken, an der Nabenhülse seitlich geklemmt, sondern es werden Befestigungselemente eingesetzt, die im Wesentlichen in einer zur Erstreckung der Nabenachse senkrecht oder quer angeordneten Ebene ausgerichtet sind. Dadurch kann der Aufbau der Nabe erleichtert werden, während gleichzeitig eine besonders leichte Wartbarkeit ermöglicht wird, da der Aufbau besonders einfach ist. Die Anzahl der verwendeten Teile kann auch verringert werden.

Das erfindungsgemäße Rad ist insbesondere für den Einsatz an einem Fahrrad vorgesehen und umfasst eine Felge und eine Nabe mit einer feststehenden Nabenachse und einem drehbar darum herum angeordneten Nabengehäuse. Eine Vielzahl von zwischen dem Nabengehäuse und der Felge angeordneten Speichen ist vorgesehen, um die Felge mit dem Nabengehäuse drehfest zu verbinden. Das Nabengehäuse ist insbesondere über wenigstens ein und vorzugsweise über wenigstens zwei Lager drehbar gegenüber der feststehenden Nebenachse gelagert. Die Nabenhülse weist wenigstens zwei an der Nabenhülse angeordnete Nabenflansche auf, an denen die Speichen zur Verbindung des Nabengehäuses mit der Felge vorgesehen sind. Erfindungsgemäß sind die Nabenflansche über im Wesentlichen senkrecht und/oder quer zur Nabenachse angeordnete Verbindungselemente an der Nabenhülse befestigt. Das erfindungsgemäße Rad umfasst eine erfindungsgemäße Nabe.

Auch das erfindungsgemäße Rad bietet erhebliche Vorteile, da durch die Verwendung von im Wesentlichen senkrecht zur Nabenachse angeordneten Verbindungselementen ein leicht wartbares Rad mit einem einfachen Aufbau und einem geringen Gewicht ermöglicht wird, welches auch relativ wenige Teile aufweisen kann.

In bevorzugten Weiterbildungen der Erfindung sind die Verbindungselemente zwischen den Nabenflanschen und der Nabenhülse insbesondere im Wesentlichen radial ausgerichtet, wodurch eine günstige Kraftübertragung ermöglicht wird.

Dadurch, dass die Verbindungselemente die Nabenflansche sowohl drehfest, als auch in axialer Richtung fest mit der Nabenhülse verbinden, sind die Nabenflansche durch die Verbindungselemente gegen ein Verdrehen und gegen eine axiale Verschiebung gegenüber der Nabenhülse bzw. dem Nabengehäuse gesichert.

Bei der Erfindung ist wenigstens ein Verbindungselement als Schraubteil ausgeführt oder umfasst wenigstens ein Schraubteil. Schraubteile haben den Vorteil, das sie verliersicher aufgenommen werden.

In einer bevorzugten Weiterbildung der Erfindung weist wenigstens ein Verbindungselement ein Außengewinde auf, welches in ein Innengewinde in dem Nabenflansch einschraubbar ist bzw. eingeschraubt ist, um den Nabenflansch mit der Nabenhülse zu verbinden.

Zur Fixierung der Schraubverbindung kann in dem im Nabenflansch angeordneten Gewindebereich Klebstoff vorgesehen sein, der insbesondere durch Einschrauben eines als Schraubteil ausgeführten Verbindungselementes aktivierbar ist. Dazu kann der Klebstoff zwei oder mehr unterschiedliche Komponenten aufweisen, die durch den Schraubvorgang aktiviert werden, sodass im Anschluss an den Schraubvorgang der Klebstoff aushärtet und einen festen aber lösbaren Sitz des Verbindungselements in der Nabenhülse gewährleistet.

In bevorzugten Weiterbildungen der Erfindung umfasst wenigstens ein Schraubteil einen Schraubenkopf. Das Stiftteil ist insbesondere als separates Teil vorgesehen ist und an dem Schraubteil verliersicher aufgenommen ist. Der Stiftteil kann in das Schraubteil eingeklebt, eingeschraubt oder darin festgeklemmt oder sonstwie daran befestigt sein. Das Schraubteil kann auch insgesamt als Stiftteil ausgeführt sein bzw. einstückig damit gebildet sein.

In allen Ausgestaltungen kann das Verbindungselement einen Anschlag am Ende aufweisen, indem z.B. der Schraubenkopf einen vergrößerten Durchmesser aufweist, so dass ein Endanschlag vorliegt. Dadurch wird verhindert, dass das Verbindungselement bzw. das Stiftteil auf den innen in der Nabenhülse liegenden Lagersitz drückt und so die Lagereigenschaften negativ beeinflusst.

In weiteren Ausgestaltungen kann das Verbindungselement in den Nabenflansch derart weit eingeführt und insbesondere eingeschraubt werden, dass radial außerhalb noch ein Nabennippel angeordnet werden kann. Durch einen im Nabenflansch angeordneten Absatz kann ein Endanschlag realisiert werden und radial weiter außen trotzdem noch der Nabennippel zur Aufnahme einer Speiche vorgesehen sein.

Der Schraubenkopf und der Schraubenkörper bestehen insbesondere aus einem leichten Metallmaterial, vorzugsweise aus einem Leichtmetall und das Stiftteil besteht insbesondere aus Metall und vorzugsweise aus Stahl. Da insbesondere das Stiftteil die Übertragung der auftretenden Kräfte übernimmt, muss es deshalb entsprechend stabil ausgelegt und ausgeführt sein. Die Oberfläche des Stiftteils kann gehärtet sein.

Vorzugsweise ist das Stiftteil zentral an dem Schraubteil vorgesehen und ragt an dem dem Schraubenkopf gegenüberliegenden Ende des Schraubenkörpers hervor, sodass das Stiftteil über das eine Ende des Schraubenkörpers hinaussteht. Das ermöglicht eine solche Ausgestaltung, bei der im bestimmungsgemäß eingebauten Zustand nur das Stiftteil des Verbindungselementes oder des Schraubteils radial von außen von dem Nabenflansch in die Nabenhülse hineinragt, um so eine drehfeste Verbindung zwischen Nabenflansch und Nabenhülse zu bewirken.

Die in der Nabenhülse vorgesehene Öffnung zur Aufnahme des Stiftteils ist insbesondere an die Außenabmessung des Stiftteils angepasst, um eine wenigstens im Wesentlichen spielfreie Verbindung zu ermöglichen, die vorzugsweise in radialer Richtung schwimmend gelagert ist.

Bei einer solchen Ausgestaltung, bei der das Stiftteil von außen in die Nabenhülse hineinragt, ist es sehr vorteilhaft, wenn das Stiftteil aus einem festen und belastbarem Material, wie z.B. Stahl besteht.

Vorzugsweise weist das Stiftteil eine glatte Außenfläche auf und es ist ein Querschnitt des Stiftteils einer Gruppe von Querschnitten entnommen, welche runde, dreieckige, viereckige und mehreckige Querschnitte sowie polygonartig geformte Querschnitte und abgerundete Abwandlungen der genannten Querschnitte, sowie sternförmige Querschnitte und dergleichen mehr umfasst.

Über die Länge des Stiftteils kann das Stiftteil gerade gestaltet sein und ist vorzugsweise zylindrisch ausgebildet, kann aber auch leicht konisch zur vorderen Spitze zulaufen.

Ein mit einer glatten Außenfläche versehenes Stiftteil, welches z.B. über einen runden Querschnitt und eine zylindrische Gestaltung verfügt, bietet erhebliche Vorteile, da durch das Eindringen des Stiftteils in die entsprechende Öffnung bzw.

Bohrung in der Nabenhülse eine drehfeste und auch in axialer Richtung feste und im Wesentlichen spielfreie Verbindung zwischen dem Nabenflansch und der Nabenhülse ermöglicht wird, während andererseits in radialer Richtung eine Bewegung von Nabenflansch zu der Nabenhülse möglich ist, sodass die radial wirkende Speichenspannung keine Auswirkung auf die innerhalb der Nabenhülse angeordnete Lagerung zwischen Nabenhülse und Nabenachse hat.

Vorzugsweise werden zwei, drei, vier, fünf, sechs oder mehr Verbindungselemente eingesetzt, die vorzugsweise alle als Schraubteil ausgeführt sind.

Vorzugsweise sind die Verbindungselemente unter im Wesentlichen gleichen Winkelabständen über den Umfang der Nabenflansche angeordnet, wobei bei Verwendung mehrerer Verbindungselemente die Belastung auf die einzelnen Verbindungselemente aufgeteilt wird.

Die Ausrichtung der Verbindungselemente kann im bestimmungsgemäß eingebauten Zustand in radialer Richtung vorgesehen sein, es ist aber auch möglich, dass die Ausrichtung der Verbindungselemente zu der radialen Richtung einen Winkel aufweist, wobei sie in allen Fällen innerhalb bzw. im Wesentlichen innerhalb einer senkrecht oder nahezu quer zur Nabenachse ausgerichteten Ebene angeordnet sind.

Vorzugsweise ist die erfindungsgemäße Nabe und auch das erfindungsgemäße Rad modular aufgebaut, sodass bei Defekten auch einzelne Teile der einzelnen Komponenten ausgetauscht werden können. Beispielsweise kann im Fall eines Flanschbruches der Nabe ein Nabenflansch separat ausgetauscht werden. Falls ein Defekt bei einer Nabenhülse auftritt, kann gegebenenfalls sogar bei montierten Speichen die Nabenhülse ausgetauscht werden, ohne, dass eine aufwändige Demontage nötig ist.

In vorteilhaften Weiterbildungen der Erfindung weisen die Nabenflansche Mittel zur Aufnahme der Speichen auf, die z.B. als Löcher ausgebildet sind, an denen die Speichenköpfe anliegen.

Vorzugsweise umfassen die Nabenflansche aber Gewindelöcher, an denen Mittel zur Aufnahme der Speichen angeordnet werden können. Vorzugsweise sind die Mittel zur Aufnahme der Speichen als Nabennippel ausgeführt, die ein Außengewinde aufweisen, mit dem sie in die Gewindelöcher der Nabenflansche eingeschraubt werden und die eine Innenbohrung mit einem Innengewinde aufweisen, in welches ein Endgewinde einer Speiche eingeschraubt werden kann.

In besonders bevorzugten Ausgestaltungen der Erfindung sind die Nabennippel und die Gewindelöcher im Wesentlichen in einer Ebene senkrecht oder auch etwa quer zur Nabenachse angeordnet, wobei die jeweilige Achse der Nabennippel zur senkrecht auf der Nabenachse stehenden Ebene leicht geneigt sein kann, z.B. etwa 3° oder ungefähr 5°.

In vorteilhaften Ausgestaltungen wird die erfindungsgemäße Nabe als Hinterradnabe ausgeführt, an welchem wenigstens ein Ritzel angeordnet werden kann. Vorzugsweise umfasst die Nabe in einem solchen Fall einen Rotor zur Aufnahme eines Ritzelpaketes von mehreren Ritzeln. Der Rotor ist dabei vorzugsweise über wenigstens ein oder zwei Lager gegenüber der Nabenachse drehbar gelagert.

In bevorzugten Ausgestaltungen weist der Rotor auf der Außenoberfläche angeordnete Mitnehmernocken auf, um die Ritzel drehfest aufzunehmen, wobei die Mitnehmernocken axiale Kerben aufweisen, um insbesondere das Gewicht des Rotors zu reduzieren. Die axial angeordneten Kerben in den Mitnehmernocken können auch als axiale Nuten, Fugen oder als Rillen oder dergleichen ausgeführt sein. Dadurch wird eine Verringerung des Gewichtes des Rotors und damit der gesamten Nabe erzielt, da die Mitnehmernocken nicht massiv ausgeführt sind.

In einer bevorzugten Weiterbildung der Erfindung weist der Rotor über den Umfang verteilt angeordnet axiale Löcher auf, die insbesondere als Bohrungen ausgeführt sind, um das Gewicht des Rotors noch weiter zu verringern. In weiteren Ausgestaltungen kann der Rotor und/oder die Nabenhülse auch als eine Art von Wabenstruktur ausgebildet sein.

Falls die Nabe über eine Aufnahme zur Aufnahme eines Ritzels oder eines Rotors verfügt, ist vorzugsweise ein Freilauf vorgesehen, der in eine Drehrichtung ein freies Drehen des Rotor gegenüber der Nabe ermöglicht. Vorzugsweise ist der Freilauf als Zahnscheibenfreilauf ausgeführt und umfasst zwei insbesondere schwimmend gelagerte Zahnscheiben, die mittels geeigneter Federn oder dergleichen von außen aufeinander zugedrückt werden.

Bei dem erfindungsgemäßen Rad ist wenigstens ein Verbindungselement in den Nabenflansch eingeschraubt, wobei das Verbindungselement auch in die Nabenhülse eingeschraubt sein kann, um die Verbindung von Nabenflansch und Nabenhülse sicherzustellen. Vorzugsweise ragt aber nicht das Gewinde, sondern nur das Stiftteil von außen in die Nabenhülse hinein, wobei das Stiftteil wenigstens dort über kein Außengewinde verfügt, sondern über eine glatte Oberfläche verfügt, denn so kann mit einer entsprechend angepassten Bohrung in der Nabenhülse eine verdrehsichere und axial gesicherte Verbindung zwischen den Nabenflansch und Nabenhülse gewährleistet werden.

Vorzugsweise werden bei dem erfindungsgemäßen Rad Speichennippel eingesetzt, die vollständig innerhalb der Hohlkammerfelge angeordnet sind, sodass von außen nur die Speichen und die Felge sichtbar sind.

Bei dem erfindungsgemäßen Rad weist die Felge radial außen ein Felgenbett und radial weiter innen einen mit Speichenlöchern versehenen Felgenboden auf, wobei das Felgenbett und der Felgenboden in radialer Richtung durch zwei Felgenflanken seitlich verbunden werden. An dem Felgenboden sind Speichenlöcher vorgesehen, wobei in jedem Speichenloch vorzugsweise ein separates Halteelement angeordnet ist, das zusammen mit einem an dem Halteelement aufgenommenen Speichennippel in gekippter Stellung durch das Speichenloch durchführbar ist, während es in zurückgekippter Stellung an der Felge anliegt und in der radial nach innen gerichteten Richtung zugfest daran aufgenommen ist, um die Speiche an der Felge zu befestigen. Die Speichenlöcher weisen insbesondere eine langgestreckte Form auf bzw. sind langgestreckt ausgebildet und erstrecken sich in Umfangsrichtung des Rades länger als in der axialen Richtung. Das Halteelement und der Speichennippel sind derart gestaltet, dass eine winkelmäßig variable Ausrichtung der Speiche zur Felge ermöglicht wird. Dazu ist der Nippelkopf abgerundet ausgebildet und ist in einer abgerundet ausgebildeten Nippelkopfaufnahme des Halteelementes aufgenommen. Insbesondere ist das Halteelement als Nippelauflage ausgebildet.

Eine solche Ausgestaltung bietet erhebliche Vorteile. Durch diese bevorzugte Konstruktion wird ein Rad zur Verfügung gestellt, welches eine leichte Konstruktion erlaubt. Das Halteelement erlaubt die Verteilung der einwirkenden Kräfte auf eine erheblich größere Fläche, sodass die Wandstärke des Felgenbodens insgesamt verringert werden kann. Dadurch wird bei gleichbleibender Stabilität des Rades ein geringeres Gesamtgewicht erzielt.

Die Ausgestaltung des Halteelementes mit einer abgerundet ausgebildeten Nippelkopfaufnahme und der abgerundet ausgestaltete Nippelkopf erlauben die Übertragung von hohen Kräften, während gleichzeitig eine optimale Ausrichtung des Speichennippels und der darin angeordneten Speiche erfolgen kann. Der Speichennippel und somit die Speiche können winkelmäßig optimal ausgerichtet werden, sodass schädliche Querkräfte, Biege- und Knickspannungen an der Speiche weitestgehend vermieden werden. Damit wird die Ursache für die meisten Speichenbrüche beseitigt, während gleichzeitig ein Speichenrad mit einer Hohlkammerfelge zur Verfügung gestellt wird, bei dem konstruktiv bedingt keine Öffnungen im Felgenbett vorhanden sein müssen, um die Speichennippel von außen durch das Felgenbett durchzustecken.

Zur Fixierung der Speichen an den an der Felge anliegenden Speichennippeln und/oder zur Fixierung der Speichen an den an der Nabe vorgesehenen Nabennippeln kann in den Speichennippeln und/oder den Nabennippeln im jeweiligen Gewindebereich ein Klebstoff vorgesehen sein, der insbesondere durch Einschrauben der Speichen aktivierbar ist. Dazu kann der Klebstoff zwei oder mehr unterschiedliche Komponenten aufweisen, die durch den Schraubvorgang aktiviert werden, sodass im Anschluss an den Schraubvorgang der Klebstoff aushärtet und einen festen aber wieder lösbaren Sitz der Speiche gewährleistet.

Weitere Vorteile und Merkmale ergeben sich aus den Ausführungsbeispielen, die nun in Bezug auf die beiliegenden Figuren erläutert werden.

In den Figuren zeigen:
- Fig. 1: ein erfindungsgemäßes Vorderrad in einer Seitenansicht;
- Fig. 2: ein erfindungsgemäßes Hinterrad in einer Seitenansicht;
- Fig. 3: ein erfindungsgemäßes Hinterrad in einer perspektivischen Ansicht;
- Fig. 4: den Rotor der Hinterradnabe nach Fig. 3 in einer ersten perspektivischen Ansicht;
- Fig. 5: den Rotor der Hinterradnabe nach Fig. 3 in einer zweiten perspektivischen Ansicht;
- Fig. 6: eine perspektivische Explosionszeichnung der Hinterradnabe nach Fig. 3;
- Fig. 7: eine prinzipielle Seitenansicht eines Verbindungselementes;
- Fig. 8: eine Aufsicht auf einen Abschnitt eines Felgenbodens;
- Fig. 9: eine Aufsicht auf ein Halteelement;
- Fig. 10: eine perspektivische Ansicht auf einen Abschnitt einer Felge;
- Fig. 11: einen vergrößerten Seitenquerschnitt der FelgenSpeichenverbindung;
- Fig. 12: den Speichennippel an dem Halteelemente nach Fig. 11 in nochmals vergrößerter Darstellung;
- Fig. 13: das Einführen des Speichennippels in die Felge;
- Fig. 14: eine perspektivische Ansicht eines Nabenflansches;
- Fig. 15: das vergrößerte Detail A-A aus der Ansicht nach Fig. 10; und
- Fig. 16: eine geschnittene und vergrößerte Ansicht einer Felge mit einem Speichennippel; und
- Fig. 17: eine geschnittene und vergrößerte Ansicht einer Felge mit einem Speichennippel mit Unterlegteil.

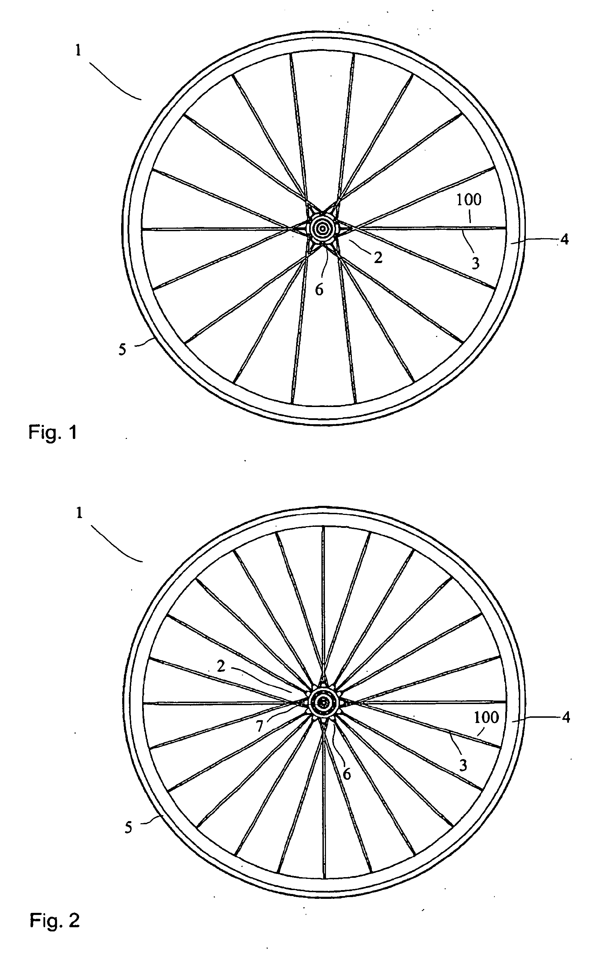

In den Figuren 1 und 2 sind zwei unterschiedlich eingespeichte erfindungsgemäße Räder jeweils in einer Seitenansicht dargestellt, die eine Nabe 2, eine Felge 4 und zwischen der Nabe und der Felge vorgesehene Speichen 3 aufweist, die jeweils Teil eines Speichenbefestigungssystems 100 sind.

Ein Speichenbefestigungssystem 100 umfasst eine Speiche 3, einen Speichennippel 31 und ein Halteelement 33 bzw. eine Nippelauflage. Weiterhin können Nabennippel 11 vorgesehen sein, um das Speichenbefestigungssystem 100 mit der Nabe zu verbinden.

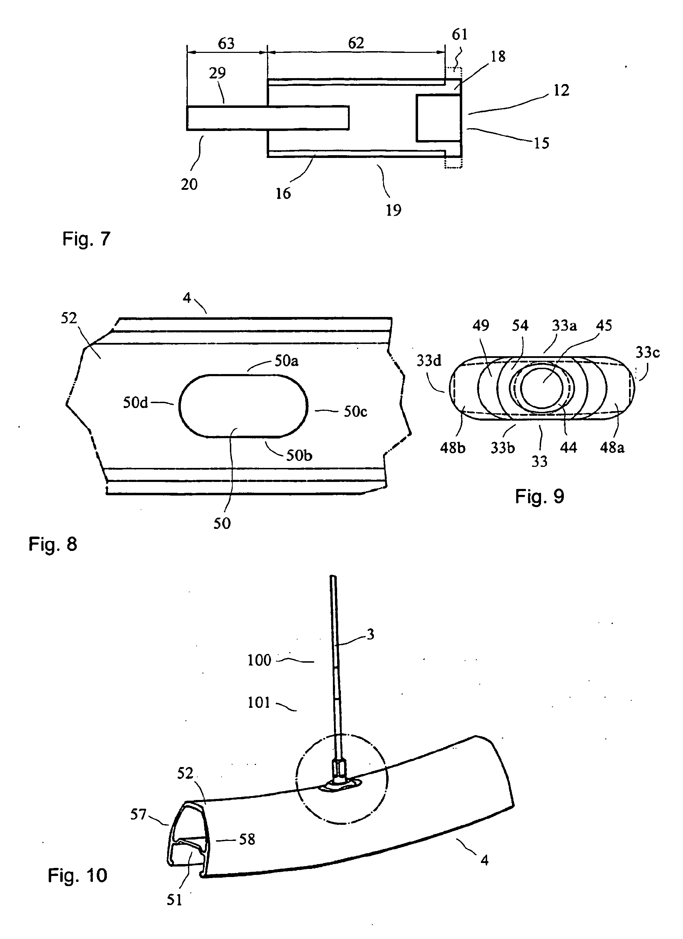

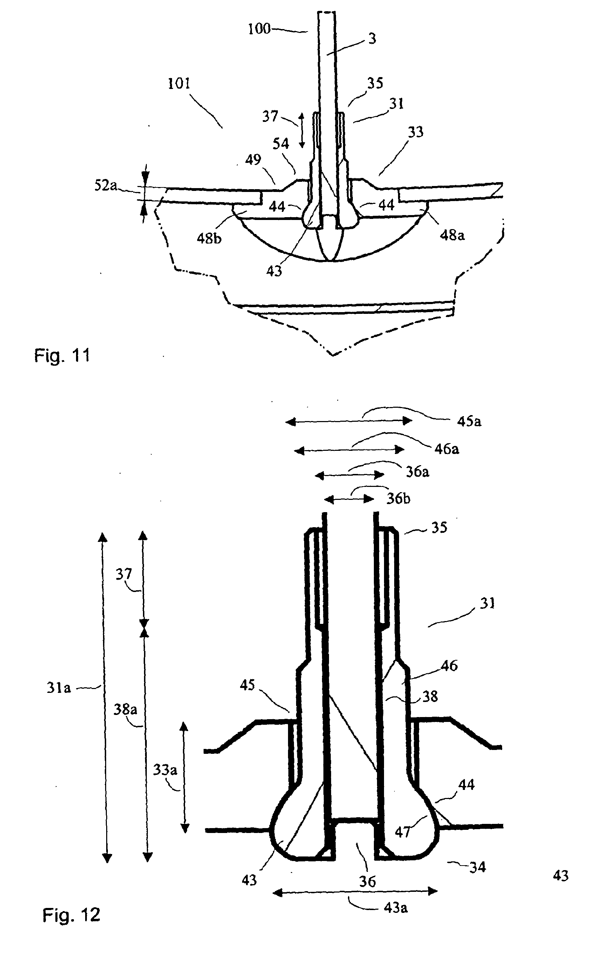

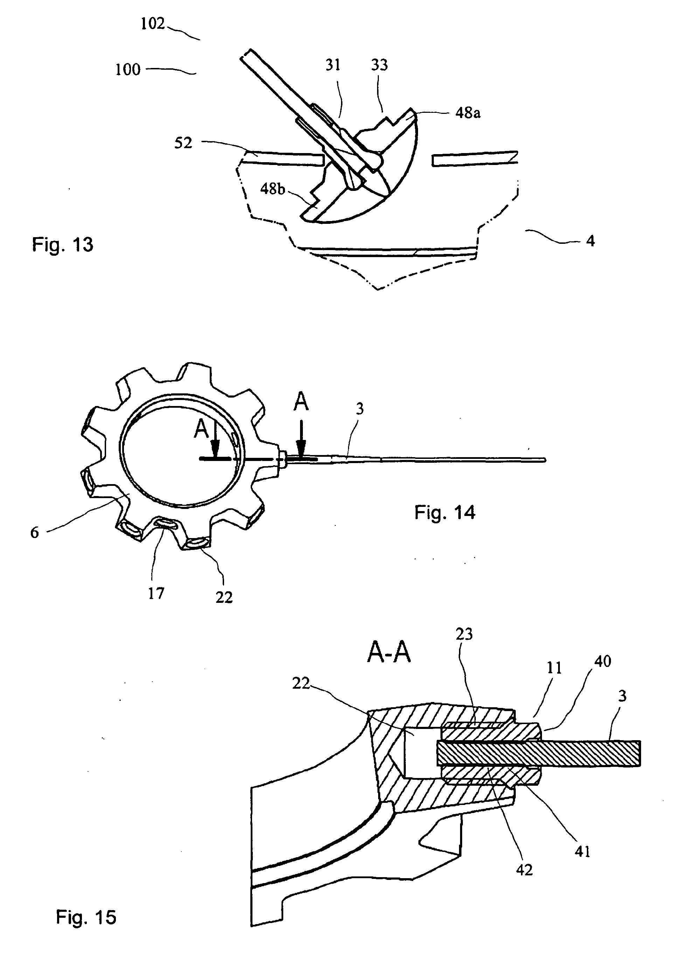

Zur Montage wird das Speichenbefestigungssystem 100 mit dem auf die Speiche 3 aufgeschobenem Halteelement 33 und dem am Speichenende aufgeschraubtem Speichennippel 31 in der in Fig. 13 gezeigten gekippten Stellung 102 mit dem Felgenflansch 48a oder 48b zunächst in das Speichenloch 50 eingeführt. Anschließend wird die Speiche 3 zurückgekippt und in die Position 101 überführt (vgl. Fig. 11), in der die Felgenflansche 48a oder 48b hinter den Felgenboden 52 greifen und somit eine große Fläche zur Aufnahme und Ableitung der auftretenden Kräfte zur Verfügung stellen. Das Speichenbefestigungssystem und die Montage des erfindungsgemäßen Rades wird weiter unten noch mit Bezug auf die Figuren 8 - 17 ausführlicher erläutert.

Das erfindungsgemäße Rad ermöglicht die Verwendung von schlauchlosen Reifen, da zum Durchführen der Speichennippel keine Löcher im Felgenbett vorgesehen werden müssen. Weiterhin hat die erfindungsgemäße Ausgestaltung auch noch den ganz erheblichen Vorteil, dass die Auflagefläche des Speichennippels 31 an der Felge vergrößert werden kann, so dass die Felgenwandung dünner und somit leichter gefertigt werden kann, da die Belastung durch die Speichen auf eine größere Fläche verteilt wird.

In Fig. 1 ist ein Vorderrad abgebildet, bei dem einige Speichen radial und einige Speichen 3 eher tangential an der Nabe angeordnet sind. Bei dem in Figur 2 dargestellten Hinterrad sind auf der in der Abbildung vorderen Seite, der Seite auf der der Rotor für das Ritzelpaket vorgesehen ist, alle Speichen radial ausgerichtet, während auf der hinteren Seite vier Speichen radial und jeweils weitere vier Speichen tangential nach rechts und nach links von der Nabe abgehen. Insgesamt ergibt sich ein Bild eines offenen Krähenfußes, da sich in der Seitenansicht jeweils eine nach links und eine nach rechts und eine radial erstreckende Speiche überschneiden.

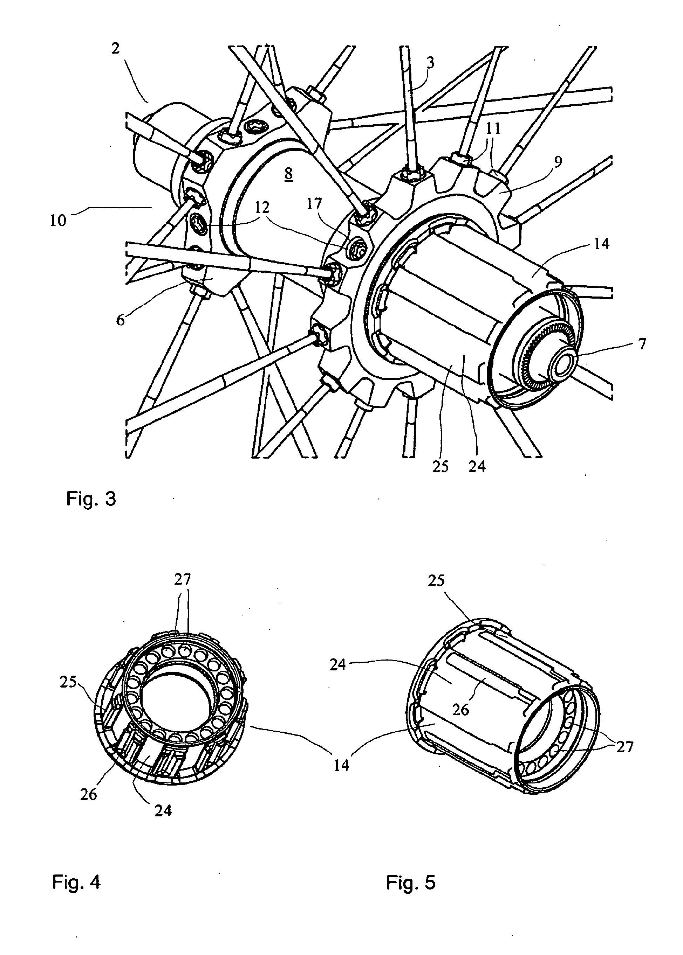

Die in Figur 3 dargestellte Hinterradnabe 2 umfasst eine Nabenachse 7, um die herum das Nabengehäuse 10 und der Rotor 14 drehbar angeordnet sind. Das Nabengehäuse 10 umfasst eine Nabenhülse 8 und zwei separate Nabenflansche 6, 9, die auf die Nabenhülse 8 aufgeschoben sind.

Um die Nabenflansche 6, 9 drehfest an der Nabenhülse 8 aufzunehmen, sind Verbindungselemente 12 vorgesehen, die an den Nabenflanschen 6, 9 angeordnet sind und die über ein Außengewinde verfügen, mit dem sie in ein Innengewinde in den Nabenflanschen eingeschraubt werden.

Die als Schraubteile 15 ausgeführten Verbindungs- bzw. Befestigungselemente 12 verfügen jeweils über einen Schraubenkopf 18, einen Schraubenkörper 19 mit einem Außengewinde 16 und ein eingesetztes Stiftteil 20 mit einem hier runden Querschnitt 21, welches über eine glatte Außenoberfläche 29 verfügt, wie es in Figur 7 dargestellt ist.

Das in Figur 7 abgebildete Schraubteil 15 kann über einen radial vergrößerten Kopfabschnitt 61 verfügen, wie es dort gepunktet dargestellt ist. Durch den Kopfabschnitt 61 mit größerem Durchmesser wird ein Anschlag zur Verfügung gestellt, der ein Einschrauben des Verbindungselementes 12 in den Nabenflansch 6 oder 9 begrenzt, um zu verhindern, dass das Stiftteil 20 auf die innerhalb der Nabenhülse angeordneten Lagersitze 55 und 56 eine Kraft ausübt. Dazu kann die Länge des Gewindeabschnittes 62 kleiner als die Dicke des Nabenflansches an dem Gewinde 17 sein und es kann die Länge des aus dem Schraubkörper 19 herausragenden Stiftabschnitts 63 insgesamt kleiner sein, als die Dicke der Nabenhülse 8 an der Stelle der Löcher 30.

Ein zu tiefes Einschrauben kann aber auch über andere Mittel verhindert werden, z.B. durch die Tiefe des Innengewindes 17 in den Nabenflanschen 6 und 9.

Wie in den Figuren 4 und 5 dargestellt, weist der Rotor 14 auf der Außenoberfläche 24 axiale Mitnehmernocken 25 auf, die mit Kerben 26 versehen sind. Die axialen Mitnehmernocken 25 erlauben eine drehfeste Anordnung eines Ritzelpaketes auf dem Rotor 14. Durch die Kerben 26 wird ein geringeres Gewicht der Nabe erzielt. Im Inneren des Rotors 14 sind Bohrungen 27 vorgesehen, die ebenfalls eine weitergehende Gewichtsreduktion des Rotors erlauben, ohne eine Funktionsbeeinträchtigung zu bewirken.

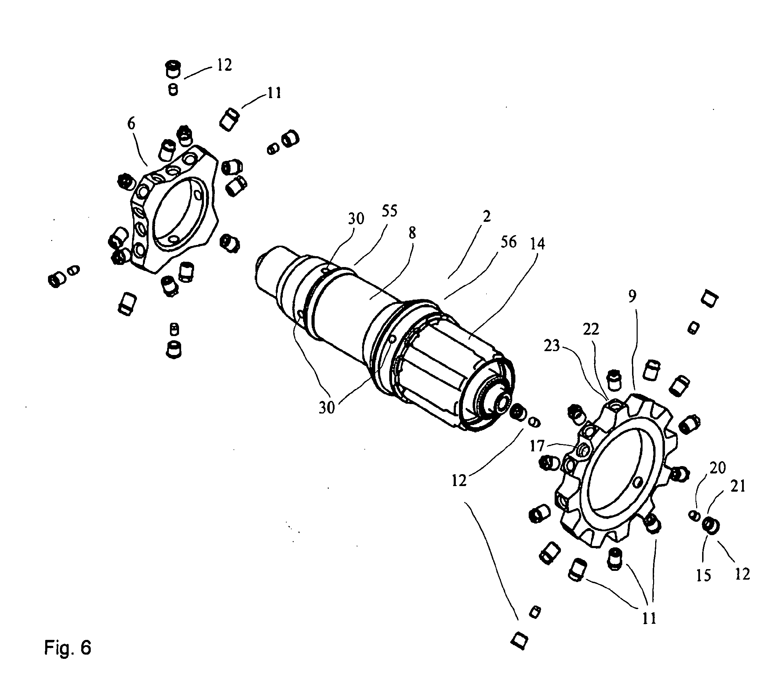

In Figur 6 ist eine Explosionsdarstellung der erfindungsgemäßen Nabe 2 dargestellt, die hier als Hinterradnabe ausgeführt ist. Die Nabenhülse 8 weist Löcher 30 auf, die hier zylindrisch ausgeführt sind und zur passgenauen Aufnahme der ebenfalls zylindrischen Stiftteile 20 dienen, um eine axiale Fixierung der Nabenflansche 6, 9 und eine Verdrehsicherung der Nabenflansche 6, 9 gegenüber der Nabenhülse 8 zu bewirken. Dabei ragen insbesondere nur die Stiftteile 20 der Verbindungselemente 12 in die Nabenhülse 8 hinein, da diese für die Belastung entsprechend ausgelegt sind und vorzugsweise aus Stahl bestehen.

Hier im Ausführungsbeispiel sind vier als Schraubteile 15 vorgesehene Verbindungselemente 12 vorgesehen, die unter jeweils einem Winkelabstand von 90 Grad radial von außen in Gewinde 17 der Nabenflansche 6, 9 eingeschraubt werden und deren Stiftteile 20 radial nach innen in die Öffnungen 30 der Nabenhülse 8 hineinragen.

Des weiteren sind an den Nabenflanschen 6, 9 in als Gewindelöchern 23 ausgeführten Löchern 22, die im Wesentlichen in einer Ebene im Wesentlichen quer zur Erstreckung der Nabenachse 7 angeordnet sind, die Nabennippel 11 angeordnet, die zur Aufnahme von Gewindeenden der Speichen 3 dienen.

In bevorzugten Ausgestaltungen können die Nabennippel 11 an den gleichen Umfangsstellen vorgesehen sein, wie die Verbindungselemente 12, wobei die Nabennippel 11 dann radial weiter außerhalb angeordnet sind, so dass die Verbindungselemente 12 nicht von außen sichtbar sind.

Wie in Figur 6 klar erkennbar ist, ist der modulare Aufbau der erfindungsgemäßen Naben 2 insgesamt einfach. Der Aufbau kann, da keine aufwändigen und schweren axialen Klemmteile vorgesehen werden müssen, insgesamt sehr leicht ausgeführt werden.

In Figur 8 ist eine Aufsicht auf einen Abschnitt des Felgenbodens 52 der Felge 4 dargestellt, in dem ein Felgenloch 50 enthalten ist. Das Felgenloch 50 weist parallele Längskanten 50a und 50b und abgerundete Querkanten 50c und 50d auf. Das Felgenloch erstreckt sich in Umfangsrichtung der Felge, sodass die Länge in Umfangsrichtung erheblich größer als die Breite in axialer Richtung der Felge ist.

Das in Figur 9 in einer Aufsicht dargestellte Halteelement 33 ist von den Dimensionen an das Felgenloch 50 gemäß Figur 8 angepasst. Dabei entsprechen die Außenmaße des Lochverschlusses 49 des Halteelements 33 im Wesentlichen den Außenmaßen des Felgenlochs 50, wobei aber sichergestellt ist, dass der Lochverschluss 49 in das Felgenloch 50 eingeführt werden kann und somit das Felgenloch 50 verschließt. Im verschlossenen Zustand hintergreifen die Felgenflansche 48a und 48b den Felgenboden 52 und sind somit im Hohlkammerbereich der Felge angeordnet und von außen nicht sichtbar.

Im eingebauten Zustand sichtbar ist der Lochverschluss 49, der sich im Wesentlichen nahtlos an den Felgenboden 52 anschließt und der Verstärkungsring 54, der zur Verstärkung der Durchgangsbohrung bzw. des Durchgangslochs 45 des Halteelements 33 vorgesehen ist. In anderen Ausgestaltungen ist es aber auch möglich, den Verstärkungsring 54 auf der anderen Seite des Halteelements 33 vorzusehen, sodass der Felgenboden mit den Halteelementen eine einzige durchgehende Fläche bildet, durch die die Speichen radial nach innen hervortreten.

In beiden Ausgestaltungen kann eine hohe Stabilität erzielt werden, sodass die konstruktive Auslegung aufgrund von optischen Gesichtspunkten erfolgen kann.

Auf der Rückseite des Halteelements 33 (gemäß der Darstellung nach Figur 9) ist gestrichelt angedeutet die abgerundet oder kugelförmig ausgebildete Nippelkopfaufnahme 44, die zur Aufnahme des abgerundeten bzw. kugelförmig ausgebildeten Nippelkopfs 43 des Speichennippels 31 dient.

In Figur 10 ist eine perspektivische Ansicht eines Felgenabschnitts 4 dargestellt, der ein Felgenloch 50 und ein darin aufgenommenes Halteelement 33 aufweist, in dem über ein Speichennippel 31 eine Speiche 3 gehalten wird. Wie zu erkennen, ist das Halteelement 33 mit dem Speichennippel 31 im Felgenboden 52 angeordnet, an dem sich in seitlicher Richtung die Felgenflanken 57 und 58 anschließen. Dabei können die Felgenflanken 57 und 58 über das Felgenbett 51 in radialer Richtung hinausstehen und somit Felgenhörner bilden.

Figur 11 zeigt in der vergrößerten Darstellung einen seitlichen Querschnitt durch den Felgenboden 52, wobei die Querschnittsformen des Halteelements 33 und Speichennippels 31 erkennbar sind.

Der Lochverschluss 49 schließt sich kontinuierlich an den Felgenboden 52 an bis der ringförmige Verstärkungsring 54 radial nach innen hervorsteht. Zentrisch in dem Verstärkungsring 54 ist die Durchgangsbohrung 45 vorgesehen, an deren radial äußerem Ende die abgerundete Nippelkopfaufnahme 44 angeordnet ist, in der die abgerundete Auflagefläche 47 des abgerundeten bzw. kugelförmigen Nippelkopfes 43 angeordnet ist. Die Aufnahme des Speichennippels 31 in dem Halteelement 33 ist in nochmals vergrößerter Darstellung in Figur 12 abgebildet. Dabei ist erkennbar, dass die Speiche 3 mit ihrem Ende in das Gewinde 38 des Speichennippels eingeschraubt ist. Das Gewinde 38 erstreckt sich über eine Länge 38a, während am radial inneren bzw. ersten Ende 35 des Speichennippels 31 über eine Länge 37 ein gewindefreier Abschnitt in dem Speichennippel vorgesehen ist. Während das Durchgangsloch 36 einen Durchmesser 36b aufweist liegt im gewindefreien Bereich 37 ein freier Durchmesser 36a vor, der größer ist als der Durchmesser 36b.

Weiterhin ist das Durchgangsloch 45 in dem Halteelement 33 mit einem Durchmesser 45a versehen, der größer ist als der Außendurchmesser 46a des Nippelkörpers 46, der sich durch das Durchgangsloch 45 erstreckt.

Durch das Zusammenwirken der abgerundeten Nippelkopfaufnahme 44 mit der entsprechend abgerundeten Auflagefläche 47 des Nippelkopfes 43 und durch die unterschiedlichen Durchmesser des Durchgangsloches 45 und des Nippelkörpers 46 wird erreicht, dass eine winkelmäßig variable Ausrichtung der Speiche ermöglicht wird. Eine feste und unvariable Einspannung des Speichennippels in dem Halteelement, wie es im Stand der Technik üblich war, kann hingegen hohe Scher- und Knickkräfte in der Speiche auslösen, die zu einer deutlich erhöhten Speichenbruchgefahr führen. Die erfindungsgemäße Ausgestaltung reduziert aufgrund der möglichen winkelmäßigen Ausrichtung eine optimale Ausrichtung der Speiche, wobei schädliche Spannungen vermieden werden.

Der gewindefreie Abschnitt 37 erstreckt sich dabei vorzugsweise über mindestens 10 % des Länge des Speichennippels, vorzugsweise über einen Bereich zwischen 20 % und 40 % der Länge des Speichennippels.

In anderen Ausgestaltungen kann das Halteelement nicht nur an den Enden 33c und 33d Auflageflächen 48a und 48b aufweisen, sondern auch an den Breitseiten 33a und 33b, wobei die Halteflächen dann unter die Längskanten 50a und 50b greifen. Bei dieser Ausgestaltung wird ein vollumfängliche Auflage an dem Speichenloch 50 ermöglicht. Zur Montage ist in einem solchen Fall eine angepasste Geometrie und eine dreidimensional-schräge Einführung in das Speichenloch nötig.

Möglich und bevorzugt ist auch eine Anordnung von Halteflächen in Form von Auflageflächen bzw. Felgenflanschen an drei Seiten, um das Einführen in das Speichenloch zu erleichtern.

In Figur 14 ist ein Nabenflansch 6 in vergrößerter Darstellung separat dargestellt, in dem ein Nabennippel 11 mit einer Speiche 3 eingeschraubt ist.

In anderen Ausgestaltungen können Nabenflansche 6 oder 9 eingesetzt werden, die über eine Aufnahmeeinrichtung zur Aufnahme zusätzlicher Komponenten verfügen. Darüber kann z.B. insbesondere eine Scheibenbremse an dem Nabenflansch angeordnet werden. Möglich ist es auch, dass an der Nabenhülse 8 noch weitere Löcher 30 vorgesehen sind, die vorzugsweise ebenfalls zylindrisch ausgeführt sind und zur passgenauen Aufnahme von weiteren Stiftteilen 20 dienen, um darüber eine weiteren Nabenflansch anzuordnen, der z.B. eine Scheibenbremse trägt. Durch das modulare Konzept kann die erfindungsgemäße Nabe flexibel erweitert werden.

In Figur 15 ist der Schnitt A-A aus Figur 14 in vergrößerter Darstellung dargestellt. Der Nabennippel 11 weist ein durchgehendes Loch 41 mit einem Gewinde 42 auf, in welches die Speiche 3 eingeschraubt wird. An dem der Speiche zugewandten Ende des Nabennippels ist über einen Abschnitt 40 der Durchmesser der Bohrung 41 größer als der Durchmesser des Gewindes 42.

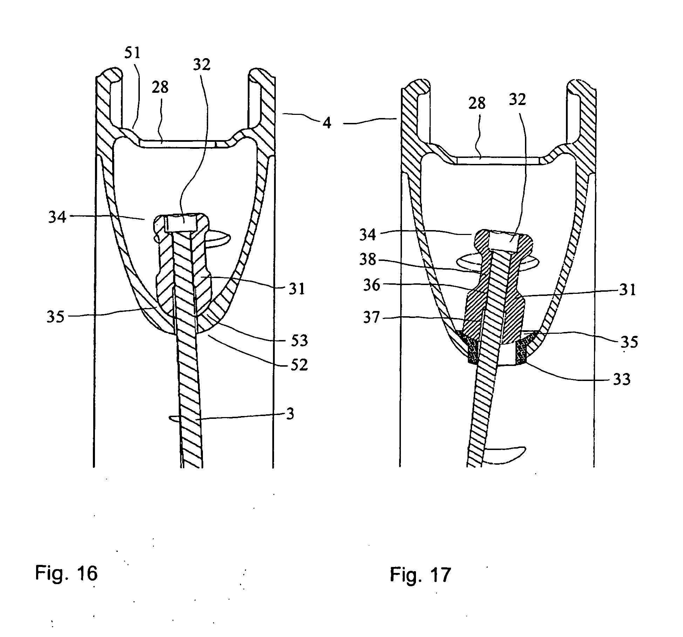

In Figur 16 ist eine weitere mögliche Ausgestaltung der Speichenaufnahme des erfindungsgemäßen Rades 1 in der Felge 4 im Schnitt dargestellt. Bei diesem Ausführungsbeispiel werden im Felgenbett 51 Löcher 28 benötigt, durch die die Speichennippel 31 radial von außen eingeführt werden. Am radial äußeren Ende 34 weist der Speichennippel 31 einen Bereich 32 auf, der in der Form an ein Werkzeug angepasst ist und z.B. als Torx oder als Innensechskant oder dergleichen ausgeführt sein kann.

Der Bodenbereich 53, an dem der Speichennippel 31 mit dem Felgenboden 52 der Felge 4 in Kontakt kommt, kann abgerundet gestaltet sein, um eine winkelmäßige Ausrichtung der Speiche zur Nabe hin zu ermöglichen, wobei der Winkel in einem konkreten Beispiel 3° gegenüber der senkrechten Ebene beträgt, aber auch größer oder kleiner sein kann. Dazu kann auch, wie in Figur 16 dargestellt, ein separates Einlegeteil 33 vorgesehen sein, welches einen sphärischen Aufnahmebereich für den Speichennippel umfasst. Der Speichennippel 31 weist ein erstes Ende 35 auf, welches am Felgenboden bzw. an dem Einlegeteil 33 anliegt und er weist ein zweites Ende 34 auf, an dem ein Werkzeugbereich 32 vorgesehen ist.

Der Speichennippel 31 weist ein durchgehendes Loch 36 auf, welches im hinteren Bereich 38 über ein Gewinde verfügt, in welches das Ende der Speiche 3 einschraubbar ist. Am ersten Ende 35 des Speichennippels 31 ist über eine Länge 37 der Durchmesser der Bohrung größer als der Durchmesser im Bereich des Gewindes 38, um beim Aufbringen der erforderlichen Speichenspannung ein Festklemmen der Speiche in dem Speichennippel durch eine lokale Verformung des Speichennippels 31 im Bereich des ersten Endes 35 zu vermeiden, an dem die Presskraft das Ende 35 des Nippels leicht verformen kann.

Bei den Ausgestaltungen nach den Figuren 16 und 17 sind die in den Felgen angeordneten Speichennippel 31 von außen nicht sichtbar, wodurch eine ansprechende und gegenüber konventionellen Rädern unterschiedliche Gestaltung ermöglicht wird.

In einer anderen bevorzugten Ausgestaltung nach Figur 17 kann die Nippelauflage bzw. das Einlegeteil 33 wiederum eine bezüglich der Längsachse des Nippels und der Speiche asymmetrische Gestaltung aufweisen, indem die Gestalt oval oder z.B. länglich ausbildet ist. Dann wird es ebenfalls ermöglicht, Felgen zu verwenden, die keine Öffnungen 28 aufweisen, so dass wieder schlauchlose Reifen Verwendung finden können. Um die Speichennippel 31 in die Hohlkammer der Felge einzuführen, kann das Loch 28 als z.B. ein Langloch ausgebildet sein, das groß genug ist, um die Nippelauflage und den Nippel insgesamt in entsprechend gedrehter Stellung einzuführen. Nach Drehung um z.B. 90° hat die Nippelauflage sicheren Halt und hält den Speichennippel 31 zuverlässig in der Felge.

In dieser Ausgestaltung wird dann vorzugsweise ein Speichennippel 31 verwendet, der durch den Felgenboden nach innen durchragt und dort von einem Werkzeug gegriffen werden kann. Der mit einem Werkzeug greifbare Bereich kann als konventioneller Vierkant oder insbesondere als Außen-Torx oder sonstwie ausgebildet sein.

Bei Verwendung solcher Nippelauflagen 33 können die Nippelauflagen 33 auch als Designelement verwendet werden, so dass eine optisch ansprechende Gestaltung des Rades möglich ist.

## Patentansprüche

1. Nabe (2), insbesondere für Fahrräder,
mit einer feststehenden Nabenachse (7) und einem gegenüber der feststehenden Nabenachse (7) drehbar gelagertem Nabengehäuse (10), wobei das Nabengehäuse (10) eine Nabenhülse (8) und zwei an der Nabenhülse (8) angeordnete separate Nabenflansche (6, 9) aufweist, an denen Speichen (3) angeordnet werden können, um das Nabengehäuse (10) mit einer Felge (4) zu verbinden,
wobei die Nabenflansche (6, 9) über im Wesentlichen senkrecht zur Nabenachse (7) angeordnete Verbindungselemente (12) an der Nabenhülse (8) befestigt sind,
**dadurch gekennzeichnet, dass** die Verbindungselemente (12) die Nabenflansche sowohl drehfest als auch in axialer Richtung fest mit der Nabenhülse (8) verbinden, wozu wenigstens ein Verbindungselement (12) als Schraubteil (15) ausgeführt ist und ein Außengewinde (16) an einem Schraubenkörper (19) und ein Stiftteil (20) umfasst.

2. Nabe nach Anspruch 1, wobei wenigstens ein Schraubteil (15) ein Außengewinde (16) aufweist, welches in ein Innengewinde (17) in dem Nabenflansch (6, 9) einschraubbar ist, um den Nabenflansch (6, 9) mit der Nabenhülse (8) zu verbinden.

3. Nabe nach Anspruch 1 oder 2, wobei das Schraubteil (15) einen Schraubenkopf (18) umfasst.

4. Nabe nach dem vorhergehenden Anspruch, wobei der Schraubenkopf (18) und der Schraubenkörper (19) aus einem leichten Material, insbesondere aus Leichtmetall besteht, und wobei das Stiftteil (20) aus Metall, insbesondere aus Stahl besteht.

5. Nabe nach einem der vorergehenden Ansprüche, wobei das Stiftteil (20) eine glatte Außenfläche (29) aufweist, wobei ein Querschnitt (21) des Stiftteils (20) einer Gruppe von Querschnitten entnommen ist, welche runde, dreieckige, viereckige und mehreckige und polygonartig geformte Querschnitte umfasst.

6. Nabe nach einem der vorhergehenden Ansprüche, wobei das Stiftteil (20) in das Schraubteil (15) eingesetzt ist.

7. Nabe nach einem der vorhergehenden Ansprüche, wobei die Nabe (2) modular aufgebaut ist, und wobei die Nabenflansche (6, 9) und die Nabenhülse (8) einzeln austauschbar sind.

8. Nabe nach einem der vorhergehenden Ansprüche, wobei die Nabenflansche (6, 9) Löcher (22) umfassen.

9. Nabe nach einem der vorhergehenden Ansprüche, wobei die Nabenflansche (6, 9) Gewindelöcher (23) umfassen, welche wenigstens teilweise zur Aufnahme von Nabennippeln (11) vorgesehen sind.

10. Nabe nach dem vorhergehenden Anspruch, wobei wenigstens ein Gewindeloch (23) im Wesentlichen senkrecht zur Nabenachse (2), z.B. radial angeordnet ist.

11. Nabe nach einem der vorhergehenden Ansprüche, wobei ein Rotor (14) zur Aufnahme eines Ritzelpaketes vorgesehen ist, welcher vorzugsweise auf der Außenoberfläche (24) angeordnete Mitnehmernocken (25) mit axialen Kerben (26) aufweist, um die Ritzel drehfest aufzunehmen.

12. Nabe nach dem vorhergehenden Anspruch, wobei der Rotor (14) über den Umfang verteilt angeordnete axiale Löcher (27) aufweist.

13. Nabe nach einem der vorhergehenden Ansprüche, wobei eine Scheibenbremse angeordnet werden kann, die an einem der Nabenflansche (6, 9) oder an einem weiteren Nabenflansch befestigbar ist.

14. Nabe nach einem der vorhergehenden Ansprüche, wobei ein Freilauf vorgesehen ist, welcher insbesondere als Zahnscheibenfreilauf ausgeführt ist.

15. Rad (1), insbesondere für ein Fahrrad,
mit einer Felge (4), einer Nabe (2) und mit einer feststehenden Nabenachse (7) und einem gegenüber der Nabenachse (7) drehbar gelagerten Nabengehäuse (10) und mit einer Vielzahl von zwischen dem Nabengehäuse (10) und der Felge (4) angeordneten Speichen (3), um die Felge (4) mit dem Nabengehäuse (10) drehfest zu verbinden, wobei das Nabengehäuse (10) eine Nabenhülse (8) und zwei an der Nabenhülse (8) angeordnete separate Nabenflansche (6, 9) aufweist, und wobei an den Nabenflanschen (6, 9) die Speichen (3) aufgenommen sind, welche das Nabengehäuse (10) mit der Felge (4) verbinden, wobei die Nabe gemäß einem der vorhergehenden Ansprüche ausgebildet ist.

16. Rad nach Anspruch 15, wobei die Nabenhülse (8) austauschbar ist, ohne die Speichen (3) zu demontieren, indem die Verbindungselemente (12) gelöst werden.

17. Rad nach einem der vorhergehenden Ansprüche 15 bis 16, wobei die Nabenflansche (6, 9) Gewindelöcher (23) umfassen, an denen wenigstens teilweise Nabennippel (11) aufgenommen sind.

18. Rad nach einem der vorhergehenden Ansprüche 15 bis 17, wobei die Felge (4) zwei Felgenflanken (57,58), ein Felgenbett (51) und einen Felgenboden (52) mit Speichenlöchern (50) umfasst, an denen die Speichen (3) aufgenommen sind, wobei in jedem Speichenloch (50) ein separates Halteelement (33)angeordnet ist, das zusammen mit einem an dem Halteelement (33) aufgenommenen Speichennippel (31) in gekippter Stellung (102) durch das Speichenloch (50) durchführbar ist, während es in zurückgekippter Stellung (101) an der Felge (4) anliegt und zugfest darin aufgenommen ist, um die Speiche (3) an der Felge (4) zu befestigen,
wobei die Speichenlöcher (50) eine langgestreckte Form aufweisen und sich in Umfangsrichtung des Rades länger als in axialer Richtung erstrecken, wobei das Halteelement (33) und der Speichennippel (31) derart gestaltet sind, dass eine winkelmäßig variable Ausrichtung der Speiche (3) zur Felge (4) ermöglicht wird, wozu der Nippelkopf (43) abgerundet ausgebildet und in einer abgerundet ausgebildeten Nippelkopfaufnahme (44) des Halteelements (33) aufgenommen ist.

## Claims

1. A hub (2), in particular for bicycles,
having a fixed hub axle (7) and a hub body (10) rotatably mounted relative to the fixed hub axle (7), said hub body (10) comprising, a hub sleeve (8) and two separate hub flanges (6, 9) disposed on the hub sleeve (8) at which spokes (3) may be disposed to connect the hub body (10) with a rim (4),
wherein the hub flanges (6, 9) are fastened to the hub sleeve (8) by connecting members (12) positioned substantially perpendicular to the hub axle (7),
**characterized in that** the connecting members (12) connect the hub flanges with the hub sleeve (8) both to be non-rotatable and fixed in the axial direction, wherein at least one connecting member (12) is configured as a screw part (15) comprising an external thread (16) at a screw body (19), and a pin part (20).

2. The hub according to claim 1, wherein at least one screw part (15) comprises an external thread (16) which can be screwed into an internal thread (17) in the hub flange (6, 9) to connect the hub flange (6, 9) with the hub sleeve (8).

3. The hub according to claim 1 or 2, wherein the screw part (15) comprises a screw head (18).

4. The hub according to the preceding claim, wherein the screw head (18) and the screw body (19) consist of a lightweight material, in particular of a light metal, and wherein the pin part (20) consists of metal, in particular of steel.

5. The hub according to any of the preceding claims, wherein the pin part (20) comprises a smooth external surface (29), wherein a cross-section (21) of the pin part (20) is taken from a group of cross-sections comprising round, triangular, square and multiangular or polygonal cross-sections.

6. The hub according to any of the preceding claims, wherein the pin part (20) is inserted into the screw part (15).

7. The hub according to any of the preceding claims, wherein the hub (2) is modular in structure and wherein the hub flanges (6, 9) and the hub sleeve (8) can be replaced individually.

8. The hub according to any of the preceding claims, wherein the hub flanges (6, 9) comprise holes (22).

9. The hub according to any of the preceding claims, wherein the hub flanges (6, 9) comprise threaded holes (23) which are provided to receive hub nipples (11) at least in part.

10. The hub according to the preceding claim, wherein at least one threaded hole (23) is positioned substantially perpendicular to the hub axle (2), e.g. radially.

11. The hub according to any of the preceding claims, wherein a rotor (14) is provided to receive a sprocket assembly and which comprises driver cams (25) having axial notches (26) preferably positioned on the outer surface (24) to non-rotatably receive the sprockets.

12. The hub according to the preceding claim, wherein the rotor (14) comprises axial holes (27) distributed over the periphery.

13. The hub according to any of the preceding claims, wherein a disc brake may be positioned which may be attached to any of the hub flanges (6, 9) or to another hub flange.

14. The hub according to any of the preceding claims, wherein a freewheel is provided which is in particular configured as a toothed disc freewheel.

15. A wheel (1), in particular for a bicycle, comprising a rim (4), a hub (2) and a fixed hub axle (7) and a hub body (10) rotatably mounted relative to the fixed hub axle (7), and having a plurality of spokes (3) disposed between the hub body (10) and the rim (4) to non-rotatably connect the rim (4) with the hub body (10), said hub body (10) comprising, a hub sleeve (8) and two separate hub flanges (6, 9) disposed on the hub sleeve (8) and wherein the spokes (3) are received at the hub flanges (6, 9) which connect the hub body (10) with the rim (4), wherein the hub is configured according to any of the preceding claims.

16. The wheel according to claim 15, wherein the hub sleeve (8) is replaceable without disassembling the spokes (3) by detaching the connecting members (12).

17. The wheel according to any of the preceding claims 15 to 16, wherein the hub flanges (6, 9) comprise threaded holes (23), at least part of which receive hub nipples (11).

18. The wheel according to any of the preceding claims 15 to 17, wherein the rim (4) comprises two rim flanks (57, 58), a rim well (51) and a rim base (52) with spoke holes (50) at which the spokes (3) are received, wherein each spoke hole (50) is provided with a separate holding member (33), which in a tilted position (102) can be guided through the spoke hole (50) together with a spoke nipple (31) received at the holding member (33), while in a reclined position (101) it contacts the rim (4) and is received therein to be tension-proof so as to fix the spoke (3) to the rim (4),
wherein the spoke holes (50) comprise an elongated shape and in the peripheral direction of the wheel extend to be longer than in the axial direction, wherein the holding member (33) and the spoke nipple (31) are configured so as to allow an angularly variable orientation of the spoke (3) relative to the rim (4), to which end the nipple head (43) is configured rounded and is received in a nipple head seat (44), which is configured rounded, of the holding member (33).

## Revendications

1. Moyeu (2), en particulier pour bicyclettes,
présentant un axe de moyeu fixe (7) et un carter de roulement (10) monté rotatif par rapport à l'axe de moyeu fixe (7), le carter de roulement (10) présentant une douille de moyeu (8) et deux flasques (6, 9) distincts agencés sur la douille (8), sur lesquels peuvent être agencés des rayons (3) pour raccorder le carter de roulement (10) à une jante (4),
les flasques (6, 9) étant fixés à la douille du moyeu (8) par le biais de pièces de raccordement (12) agencées essentiellement dans un plan perpendiculaire à l'axe du moyeu (7),
**caractérisé en ce que** les pièces de raccordement (12) raccordent de manière fixe les flasques du moyeu à la douille (8) aussi bien en rotation que dans l'orientation de l'axe, au moins une pièce de raccordement (12) étant conçue dans ce but en tant qu'élément de vissage (15) et comprenant un filet extérieur (16) sur un corps de vis (19) ainsi qu'une partie en forme de pion (20).

2. Moyeu selon la revendication 1, au moins un élément de vissage (15) présentant un filet extérieur (16) vissable dans un filet intérieur (17) dans le flasque du moyeu (6, 9) dans le but de raccorder le flasque (6, 9) à la douille du moyeu (8).

3. Moyeu selon la revendication 1 ou 2, l'élément de vissage (15) comprenant une tête de vis (18).

4. Moyeu selon la revendication précédente, la tête (18) et le corps de vis (19) étant constitués à base d'un matériau léger, plus particulièrement d'un métal léger, et la partie pion (20) étant métallique, plus particulièrement en acier.

5. Moyeu selon l'une quelconque des revendications précédentes, la partie pion (20) présentant une surface extérieure (29) lisse, une section transversale (21) de la partie pion (20) étant extraite d'un groupe de sections transversales comprenant des sections rondes, triangulaires, rectangulaires et de forme polygonale.

6. Moyeu selon l'une quelconque des revendications précédentes, la partie pion (20) étant insérée dans l'élément de vissage (15).

7. Moyeu selon l'une quelconque des revendications précédentes, le moyeu (2) étant monté de manière modulaire, et les flasques (6, 9) et la douille du moyeu (8) pouvant être remplacés indépendamment l'un de l'autre.

8. Moyeu selon l'une quelconque des revendications précédentes, les flasques du moyeu (6, 9) comprenant des trous (22).

9. Moyeu selon l'une quelconque des revendications précédentes, les flasques du moyeu (6, 9) comprenant des trous filetés (23) prévus au moins partiellement pour accueillir des écrous de moyeu (11).

10. Moyeu selon la revendication précédente, au moins un trou fileté (23) étant agencé essentiellement dans le plan perpendiculaire à l'axe du moyeu (2), par exemple dans un plan radial.

11. Moyeu selon l'une quelconque des revendications précédentes, un rotor (14) étant prévu pour accueillir un ensemble de pignons présentant des cames d'entraînement (25) agencées, de préférence sur la surface externe (24) et à rainures axiales (26) afin d'accueillir les pignons de façon fixe.

12. Moyeu selon la revendication précédente, le rotor (14) présentant des trous (27) axiaux répartis sur toute sa circonférence.

13. Moyeu selon l'une quelconque des revendications précédentes, un frein à disque pouvant être agencé et fixé à un des flasques (6, 9) du moyeu ou à un autre flasque de moyeu.

14. Moyeu selon l'une quelconque des revendications précédentes, une roue libre étant prévue, celle-ci étant plus particulièrement réalisée en tant que roue libre à couronne crantée.

15. Roue (1), en particulier pour bicyclette,
comprenant une jante (4), un moyeu (2), un axe de moyeu fixe (7), un carter de roulement (10) monté rotatif par rapport à l'axe de moyeu (7), plusieurs rayons (3) agencés entre le carter de roulement (10) et la jante (4) pour raccorder de façon fixe la jante (4) au carter de roulement (10) dans le mouvement de rotation, le carter de roulement (10) présentant une douille (8) et deux flasques (6, 9) agencés séparément sur la douille (8), et les flasques du moyeu (6, 9) accueillant les rayons (3), lesquels raccordent le carter de roulement (10) à la jante (4), le moyeu étant façonné selon l'une quelconque des revendications précédentes.

16. Roue selon la revendication 15, la douille du moyeu (8) pouvant être changée sans démonter les rayons (3), en détachant les pièces de raccordement (12).

17. Roue selon l'une quelconque des revendications 15 à 16, les flasques du moyeu (6, 9) comprenant des trous filetés (23) accueillant au moins partiellement des écrous (11).

18. Roue selon l'une quelconque des revendications 15 à 17, la jante (4) comprenant deux flancs (57, 58), un creux (51) ainsi qu'un fond de jante (52) pourvu de trous de rayons (50) dans lesquels sont montés les rayons (3), chaque trou de rayon (50) étant muni d'un élément de maintien (33) séparé qui peut être passé en position basculée (102) à travers le trou de rayon (50) avec un écrou de rayon (31) monté sur l'élément de maintien (33), alors que rebasculé en position normale (101), il s'appuie sur la jante (4) en résistant à la traction afin de fixer le rayon (3) à la jante (4),
les trous de rayons (50) ayant une forme allongée et s'étirant plus dans le sens de la circonférence de la roue que dans le sens axial, l'élément de maintien (33) et l'écrou de rayon (31) étant conçus de telle sorte à permettre une orientation variable de l'angle formé entre le rayon (3) et la jante (4), la tête de l'écrou (43) étant à cette fin façonnée en arrondi et s'insérant dans un réceptacle arrondi de tête d'écrou (44) de l'élément de maintien (33).
